# DEMANDE DE BREVET EUROPEEN

(11) **EP 2 634 223 A2**
(43) Date de publication de la demande: **04.09.2013**
(21) Numéro de dépôt: 13358001.9
(22) Date de dépôt: 08.01.2013
(51) Int. Cl.: C09D 5/06, C09D 5/34, C09D 133/00

(54) **Peinture à modeler, son procédé de fabrication, et objets décoratifs ou décorés en faisant application**

(30) Priorité: 13.01.2012 FR 1200108
(71) Demandeur: Pebeo Société Anonyme, 13420 Gemenos (FR)
(72) Inventeur: Guichard, Jean-Luc, 13013 Marseille (FR)
(74) Mandataire: Marek, Pierre

(57) **Abrégé**

Peinture modelable caractérisée en ce qu'elle est constituée par un mélange contenant :
- un liant organique constitué par un polymère à basse température de transition vitreuse (T_{g}) ;
- des charges de très faible densité ;
- des pigments ou matières colorantes ;
- des agents de modification de rhéologie ;
- de l'eau.

## Description

La présente invention concerne une peinture à modeler.

Elle se rattache au domaine des peintures pour activités artistiques ou éducatives ou ludiques ou professionnelles.

Elle vise plus particulièrement une peinture modelable utilisable dans les activités d'éveil des enfants à la création artistique, ou pour l'organisation de loisirs éducatifs, ou pour la conception et/ou la décoration d'objets divers dans le domaine des arts appliqués, ou dans le domaine des beaux-arts. Elle concerne également le procédé de préparation de cette peinture modelable, et les objets divers fabriqués ou décorés avec cette peinture.

Comme indiqué ci-dessus, l'invention peut avoir de multiples applications. Cette peinture est notamment bien appropriée à une utilisation par de jeunes enfants, dans le cadre d'activités d'éveil de ceux-ci à la création artistique. C'est pourquoi il est plus particulièrement fait mention de cette application dans la suite du présent exposé.

Actuellement, c'est la gouache du genre dit gouache aux doigts qui est utilisée majoritairement à l'école ou à la maison pour initier les enfants à la peinture, et cela pour plusieurs raisons :
- il s'agit d'une peinture à l'eau permettant une dilution facile des couleurs et un nettoyage aisé du matériel d'application avec de l'eau ;
- opacité des couleurs ;
- réalisation de jolis aplats sans trop de traces de pinceaux (dans le cas d'application au pinceau) ;
- possibilité d'utiliser les doigts pour étendre les couleurs sur la surface réceptrice de sorte que les doigts sont les premiers outils que l'enfant utilise pour peindre, généralement dès l'âge de 3 ans ; il en résulte que la majorité des peintures pour peindre avec les doigts sont constituées par des gouaches.

Toutefois, les gouaches ne permettent pas de réaliser des décors ou des objets en trois dimensions ; en effet, si la gouache est appliquée en couche épaisse, elle se craquèle et peut se décoller du support si celui-ci est souple. D'autre part, si elle n'est pas protégée par un verre, ou soigneusement vernie ou couverte d'une fine couche de matière protectrice, la gouache reste très vulnérable à l'eau.

La pâte à modeler est un matériau malléable doté d'un degré de plasticité permettant de façonner des objets en trois dimensions, mais elle n'est pas appropriée à la réalisation de tableaux ou aplats divers. En outre, elle ne durcit pas définitivement pour répondre à la possibilité de pétrissages répétés par les enfants dans le cadre d'activités de création de formes variées, ou par les plasticiens professionnels. Elle est aussi sujette à des craquelures, de sorte que la pérennité des objets modelés ne peut être assurée.

Il existe également des pâtes à modeler qui durcissent mais elles ont notamment pour inconvénient de ne pas être applicables sur un support, notamment sur un support souple, de sorte à ce qu'elles adhèrent à celui-ci.

L'invention se propose, selon une application particulièrement visée, de mettre à la disposition des enfants, un nouveau matériau pouvant être appliqué au doigt sur des surfaces de nature et formes diverses, de façon comparable à une possibilité d'usage de la gouache, ou susceptible d'être modelé pour obtenir des formes variées tridimensionnelles.

Ce nouveau matériau qui peut être avantageusement utilisé pour des activités d'éveil des enfants à la création artistique, présente, avant emploi, une consistance humide, visqueuse ou pâteuse, permettant son conditionnement et sa commercialisation dans des contenants de différents types tels que tubes compressibles, pots, etc., autorisant le dépôt sur un support plat ou de forme diverse, de couches de matières colorées en relief, lesquelles, après un temps de séchage et d'évaporation des composants volatiles du matériau, se présentent sous des formes solides en trois dimensions, non diluables dans l'eau et dotées de ductilité et de mémoire de forme, sans diminution de volume.

La peinture modelable selon l'invention est notamment remarquable en ce qu'elle est constituée par un mélange contenant :
- un liant organique constitué par un polymère à basse température de transition vitreuse (T_{g}) ;
- des charges de très faible densité ;
- des pigments ou matières colorantes ;
- des agents de modification de rhéologie ;
- de l'eau.

Suivant une autre disposition caractéristique, le liant organique est constitué par un copolymère de type acrylique.

Selon une autre disposition caractéristique, les charges de très faible densité sont constituées par des microbilles de verre ou de silice.

Selon une autre disposition caractéristique, l'agent de modification de rhéologie comprend :
- d'une part, un premier épaississant de type ASE (de l'anglais : Acrylic Swellable polymer Emulsion) ;
- d'autre part, un deuxième épaississant de type HASE (de l'anglais : Hydrophobically-modified Acrylic Swellable polymer Emulsion).

Selon une autre disposition caractéristique de l'invention, la peinture modelable contient une base.

De manière préférée, la peinture modelable selon l'invention contient encore un ou plusieurs conservateur(s) qui peuvent, par exemple, être avantageusement constitués par :
- le (2-hydroxy-éthyl)-phényléther ; et/ou
- le bronopol.

Également, de manière préférée, la peinture modelable selon l'invention contient aussi un agent d'amertume qui peut être constitué par le benzoate de dénatonium.

Selon le procédé de l'invention, on incorpore, sous agitation, dans une cuve contenant un volume d'eau adéquat, le liant organique sous forme de dispersion ou émulsion du polymère de base, les charges de très faible densité, et de préférence, le conservateur à plus haut point d'ébullition, un tensioactif non ionique, une base. Ces ingrédients étant brassés par un mélangeur qui peut être avantageusement un mélangeur à turbine, équipant ladite cuve. On incorpore ensuite, sous agitation :
- les pigments ou matières colorantes ;
- le ou les conservateurs à plus bas point d'ébullition ;
- l'agent d'amertume ;
- et les agents de modification de rhéologie.

Le mélange bulleux homogène obtenu est ensuite conditionné dans des tubes compressibles, ou dans des pots, ou dans tout autre contenant approprié.

La peinture modelable ainsi élaborée est prête à l'emploi. Comme indiqué précédemment, elle peut être appliquée au doigt, en particulier lorsqu'elle est utilisée par des enfants, par exemple à partir de 3 ans ; elle peut être aussi utilisée au moyen d'instruments traditionnels employés par les artistes peintres, tels que pinceaux, spatules, couteaux, etc.

De manière également très intéressante, elle peut être utilisée, par des utilisateurs plus âgés, par exemple à partir de 7 à 8 ans.

Elle peut encore être appliquée au moyen de douilles ou canules dotées d'un orifice de sortie ou d'une extrémité de sortie de section variée et susceptibles d'être fixées sur l'extrémité d'un tube.

L'invention concerne également un kit de peinture comprenant des tubes compressibles renfermant différentes couleurs de peinture à modeler selon l'invention et comportant un embout de sortie. Ce kit comportant également au moins une, ou plusieurs, douille(s) ou canule(s) d'extrusion agencée(s) pour pouvoir être fixée(s) de manière amovible sur ledit embout. Ces douilles ou canules comportant des orifices de sortie de conformation ou section variées.

L'invention concerne encore les oeuvres, les objets décorés et les objets créés, réalisés au moyen de cette invention.

Les buts, caractéristiques et avantages ci-dessus, et d'autres encore, ressortiront mieux de la description détaillée qui suit et des dessins annexés dans lesquels :
- la figure 1 est une vue en plan d'un exemple d'une création picturale réalisable par un enfant,
- la figure 2 est une vue en coupe selon la ligne 2-2 de la figure 1,
- la figure 3 est une vue en perspective avec arrachement partiel d'un exemple d'objet (gobelet) décoré à l'aide de peintures à modeler de colorations différentes, selon l'invention,
- la figure 4 est une vue en perspective d'un objet modelé à l'aide de peintures à modeler de colorations différentes,
- la figure 5 est une vue de face d'un premier exemple de douille ou canule d'extrusion adaptable sur l'embout fileté de sortie d'un tube compressible,
- la figure 6 est une vue de dessous de la douille selon la figure 5 ;
- la figure 7 est une vue partielle de face d'un embout de sortie d'un tube compressible utilisé comme contenant de la peinture à modeler,
- la figure 8 est une vue en plan du tube selon la figure 7,
- la figure 9 est une vue analogue à la figure 5 illustrant un deuxième exemple de canule d'extrusion,
- la figure 10 est une vue de dessous de la douille selon la figure 9,
- la figure 11 est une vue analogue à la figure 5 illustrant un troisième exemple de canule d'extrusion,
- la figure 12 est une vue de dessous de la douille selon la figure 11,

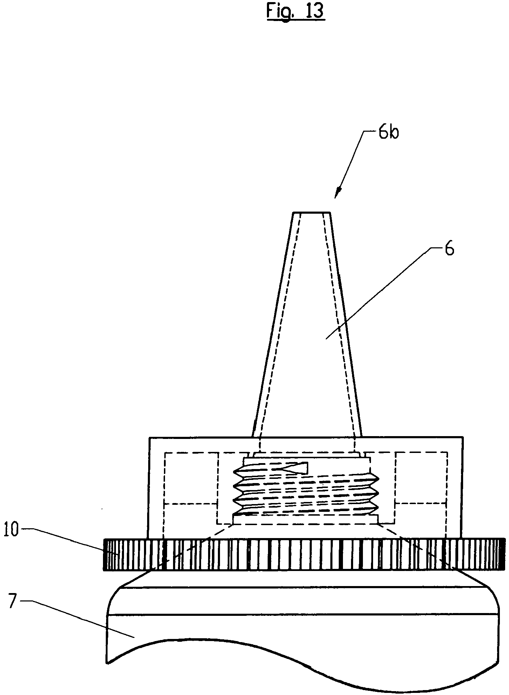

- la figure 13 est une vue partielle de face montrant le positionnement d'une douille d'extrusion sur l'embout de sortie fileté d'un tube compressible,

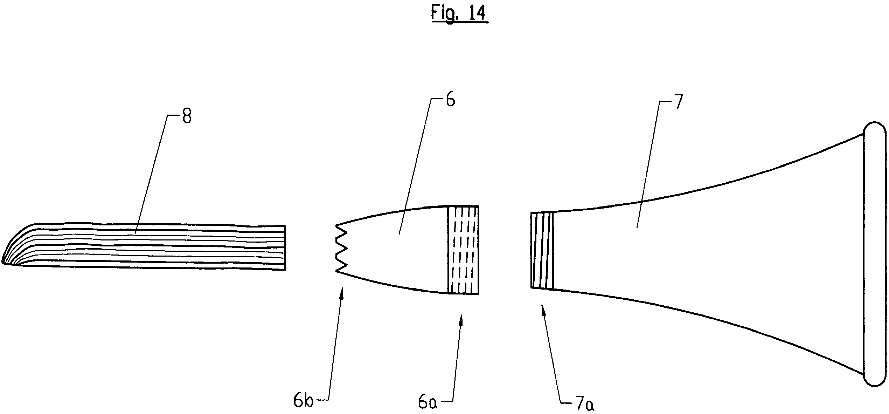

- la figure 14 est une vue éclatée à caractère schématique, montrant un mode de réalisation et d'utilisation de l'invention selon lequel on se sert d'une douille d'extrusion adaptable sur l'embout de sortie d'un tube compressible.

On se reporte auxdits dessins pour décrire des exemples intéressants, quoique nullement limitatifs, de réalisation de la peinture modelable selon l'invention et de mise en oeuvre du procédé de réalisation de cette peinture.

La peinture modelable selon l'invention est principalement remarquable en ce qu'elle est constituée par un mélange contenant :
- un liant organique constitué par un polymère à basse température de transition vitreuse (T_{g}) ;
- des charges de très faible densité ;
- des pigments ou matières colorantes ;
- des agents de modification de rhéologie ;
- de l'eau.

Avantageusement, le polymère à basse température de transition vitreuse T_{g} peut être constitué par un polymère acrylique ou par un polymère acrylate.

Le liant organique à basse température de transition vitreuse est, de manière intéressante, constitué par un copolymère de type acrylique, comprenant en outre, dans la chaîne polymère, des monomères Butyl-acrylate (BA), qui, par la longueur de la chaîne carbonée flexible, jouent le rôle de plastification interne du polymère, et contribuent à la possibilité de mouvements des chaînes les unes par rapport aux autres. Le film formé d'un tel copolymère reste donc souple et ductile, y compris à des températures proches de celles de la température ambiante. Ce copolymère n'est donc pas un homopolymère (polymère formé à partir d'un seul type de monomère) mais un copolymère formé à partir d'acrylate de butyle et d'autres monomères de type acrylique, procurant moins de flexibilité que l'acrylate de butyle. Il en résulte une température de transition vitreuse Tg plus élevée (de l'ordre de -30°C) que celle de l'homopolymère obtenue à partir d'acrylate de butyle seul.

Les charges de très faible densité peuvent être constituées par des microbilles de verre ou de silice.

L'agent de modification de rhéologie comprend :
- d'une part, un premier épaississant de type ASE (de l'anglais : Acrylic Swellable polymer Emulsion) ;
- d'autre part, un deuxième épaississant de type HASE (de l'anglais : Hydrophobically-modified Acrylic Swellable polymer Emulsion).

L'épaississant de type ASE est un polymère acrylique en émulsion dans l'eau (pH très acide) qui, sous l'effet d'une base de neutralisation (par exemple constituée par de la soude), forme un sel (on passe de la forme acrylique à la forme acrylate).

Lorsque le polymère passe de la forme acrylique à la forme acrylate, sous l'effet de cette neutralisation, les interactions de type "hydrophile" deviennent alors possibles et puissantes, conduisant le polymère à se déployer (gonfler) dans l'eau. Son volume apparent augmente dans la mesure où une quantité importante de molécules d'eau restent liées par liaison hydrogène aux groupements acrylates.

Ces épaississants de type ASE donnent au milieu un profil rhéologique de type pseudo-plastique avec un développement de viscosité essentiellement à bas taux de cisaillement.

Par leur reprise de viscosité rapide après cisaillements, ils permettent au produit formulé de conserver tout ou partie du relief qui lui a été donné.

Les épaississants de type HASE sont de même type que les précédents, mais comportent, dans la chaîne polymère, des groupements hydrophobes, capables de créer, avec d'autres composants organiques présents dans le mélange (liant polymère acrylique par exemple), des interactions de type hydrophobe.

Ils donnent au milieu, un profil rhéologique moins typé pseudo-plastique mais plus typé newtonien avec un développement de viscosité à taux de cisaillement intermédiaire, ils permettent d'augmenter la résistance du produit sous l'outil d'application, donnant ainsi plus de consistance.

De manière préférée, la peinture modelable selon l'invention contient encore, un ou plusieurs conservateur(s) de points d'ébullition différents. De préférence, la peinture contient deux conservateurs, l'un, à haut point d'ébullition, incorporé plutôt en début de fabrication du produit, l'autre, à point d'ébullition plus bas, incorporé plutôt en fin de fabrication.

Par exemple, ces conservateurs peuvent être avantageusement constitués par :
- le (2-hydroxy-éthyl)-phényléther qui a pour avantages, ou aspects positifs supplémentaires liés à son utilisation, de plastifier le produit et contribue à le rendre ductile et moins sensible à la déformation, et/ou
- le bronopol qui est un composé de synthèse anti-microbien généralement utilisé comme conservateur dans certains médicaments et qui a une couverture plus large contre les bactéries, les levures, les champignons, ...

De manière préférée, la peinture modelable contient également un agent d'amertume, qui peut être constitué par le benzoate de dénatonium.

Le mélange constituant la peinture modelable selon l'invention peut encore avantageusement contenir :
- un tensioactif non ionique ;
- une base.

Le rôle du tensioactif dans la formulation est d'éviter une adsorption des particules de charge de faible densité par le liant organique, ce qui conduirait, lors du conditionnement du produit, à une augmentation de viscosité incontrôlée pouvant même conduire à une prise en masse du produit, ce qui le rendrait inutilisable. L'utilisation de ce type de tensioactif permet de prévenir ce phénomène. Le rôle de la base est de neutraliser les épaississants de type ASE et HASE précédemment mentionnés leur permettant ainsi de développer leur propriété épaississante.

Le tableau ci-dessous donne, à titre indicatif seulement, des exemples de pourcentages massiques des matières premières ou ingrédients entrant dans la composition de la peinture modelable.

### Aspects techniques permettant d'obtenir les propriétés désirées : choix des matières premières utilisées et commentaires de mise en oeuvre.

| **Nature de la matière première utilisée** | **% massique d'utilisation indicatif** |
|---|---|
| Liant organique permettant l'obtention d'un film souple tel que dispersion ou émulsion de polymère de basse T_{g}. En outre, le film sec obtenu doit être insoluble dans l'eau. | 45% à 55% |
| Charges de très faible densité | 5% à 20% |
| Pigments ou matières colorantes | 1%à15% |
| Conservateurs : autorisés par la Norme EN 71-7 | Suivant % maximum définis dans la Norme EN 71-7 |
| Tensioactif non ionique | 0,2% à 1,0% |
| Base | qsp (quantité suffisante pour) respect du paramètre de contrôle de pH 7,2 - 7,7 à 23°C, +/- 2°C |
| Agent d'amertume : tel que requis par la Norme EN 71-7 | Suivant % maximum défini dans la Norme EN 71-7 |
| Agents de modification de rhéologie | 1%à5% |
| Eau | Complément à 100% |

Un exemple de procédé de préparation de la peinture modelable selon l'invention est résumé par le tableau ci-après, les phases de ce procédé apparaissant dans les plages grisées du tableau.

| **Nature de la matière première utilisée** | **% massique d'utilisation indicatif** |
|---|---|
| Incorporer dans la cuve de fabrication | |
| **1**- Eau | 25% à 30% |
| Incorporer sous agitation : vitesse linéaire de la pale : minimum 6 m.s⁻¹ - maximum 12 m.s⁻¹ | |
| **2**- Conservateur à plus haut point d'ébullition (autorisés par la Norme EN 71-7) | Suivant % maximum définis dans la Norme EN 71-7 |
| **3**- Tensioactif non ionique | 0,2% à 1,0% |
| **4**- Base | qsp (quantité suffisante pour) respect du paramètre de contrôle de pH 7,2 - 7,7 à 23°C, +/- 2°C |
| 5- Liant organique permettant l'obtention d'un film souple tel que dispersion ou émulsion de polymère de basse T_{g}. En outre, le film sec obtenu doit être insoluble dans l'eau. | 45%à 55% |
| 6- Charges de très faible densité | 5% à 20% |
| - Veiller à mouiller complètement la quantité totale incorporée de charge de très faible densité, puis | |
| - Disperser avec une vitesse linéaire de pale minimum 13 m.s⁻¹ - maximum 37 m.s⁻¹ jusqu'à obtention d'agglomérats de taille maximale de 80 µm (80 micromètres) en prenant soin de ne pas dépasser une température de 40°C maximum dans le milieu | |
| - Incorporer sous agitation : vitesse linéaire de la pale : minimum 6 m.s⁻¹ - maximum 12 m.s⁻¹ en prenant soin de ne pas dépasser une température de 40°C maximum dans le milieu | |
| **7**-Pigments ou matières colorantes | 1% à 15% |
| **8**- Conservateurs à plus bas point d'ébullition (autorisés par la Norme EN 71-7) | Suivant % maximum définis dans la Norme EN 71-7 |
| **9**- Agent d'amertume : tel que requis par la Norme EN 71-7 | Suivant % maximum défini dans la Norme EN 71-7 |
| **10**- Agents de modification de rhéologie | 1 % à 5% et en tout état de cause qsp (quantité suffisante pour) viscosité dynamique de 21 000 à 23 000 millipascal/seconde à une température de 23°C +/- 2°C |

Dans les deux tableaux ci-dessus, la Norme EN 71-7 correspond à la norme européenne, version 2002, en vigueur pour la partie qui concerne les peintures aux doigts qui sont considérées comme des jouets au sens de la réglementation européenne.

A l'issue de son processus de préparation, le produit obtenu se présente sous forme d'une pâte homogène ayant un aspect de mousse aérée en raison de la présence de bulle.

Cette pâte a une viscosité dynamique comprise entre 21 000 et 23 000 mPa.s (millipascal seconde : système d'unité SI). Exprimée dans le système d'unité CGS, cette viscosité est de l'ordre de 210 à 230 Poises. Ce produit présente une densité comprise entre 0,5 et 0,7, et un pH compris entre 7,2 et 7,7. La viscosité, la densité et le pH du produit dépendent de la température, ainsi, les indications ci-dessus sont valables à une température de l'ordre de 23°C, +/-2°C.

La Concentration Pigmentaire Volumique (CPV) correspond au ratio entre le volume représenté par les matières pulvérulentes (à savoir essentiellement la charge de très faible densité) et le volume total du produit constitué des matières pulvérulentes, de la matrice (formée par le liant organique) et des autres matières filmogènes sèches (constituées ici par les épaississants de type ASE et HASE).

Dans l'exemple selon lequel le pourcentage massique du liant organique en émulsion est compris entre 45% et 55%, et le pourcentage massique de la charge de très faible densité est compris entre 5% et 20%, la CPV du produit final obtenu est comprise entre 50% et 80%.

La peinture modelable obtenue peut être conditionnée dans tout contenant approprié tels que tubes compressibles en matière plastique ou autre, pots, seringues, etc. Par exemple, pour un produit destiné à une utilisation par des enfants en bas âge (à partir de 3 ans), celui-ci est conditionné en pot, afin que les enfants puissent prélever directement le produit à la main et l'appliquer à l'aide des doigts sur une surface réceptrice.

Pour une utilisation par des enfants plus âgés, par exemple à partir de 6 ans, le produit pourrait être conditionné dans des tubes compressibles, ces tubes compressibles étant munis d'un bouchon se vissant sur un embout de sortie fileté équipant l'une des extrémités desdits tubes.

Dans ce cas, et comme illustré, il pourra être proposé aux utilisateurs, des douilles ou canules 6, du genre des douilles équipant les poches à douilles couramment utilisées en cuisine pour décorer ou garnir un met. Dans l'application à l'invention, ces douilles 6 comportent un taraudage 6a permettant de les fixer, de manière amovible, par vissage sur l'embout de sortie 7a des tubes 7 à la place du bouchon, de sorte à permettre d'écrire ou de dessiner directement à l'aide de l'instrument constitué par l'ensemble "tube compressible-douille d'expulsion".

La base de la douille d'extrusion 6 peut comporter un pourtour 10 moleté permettant de faciliter l'action de vissage et de dévissage de ladite douille sur l'embout de sortie fileté du tube compressible 7.

Le pourtour des orifices ou canaux de sortie 6b des douilles 6 peut être conformé pour permettre l'extrusion du produit sous forme de filet, ou boudin de peinture 8 présentant une forme aplatie, ou cylindrique, ou cannelée, ou torsadée, etc.

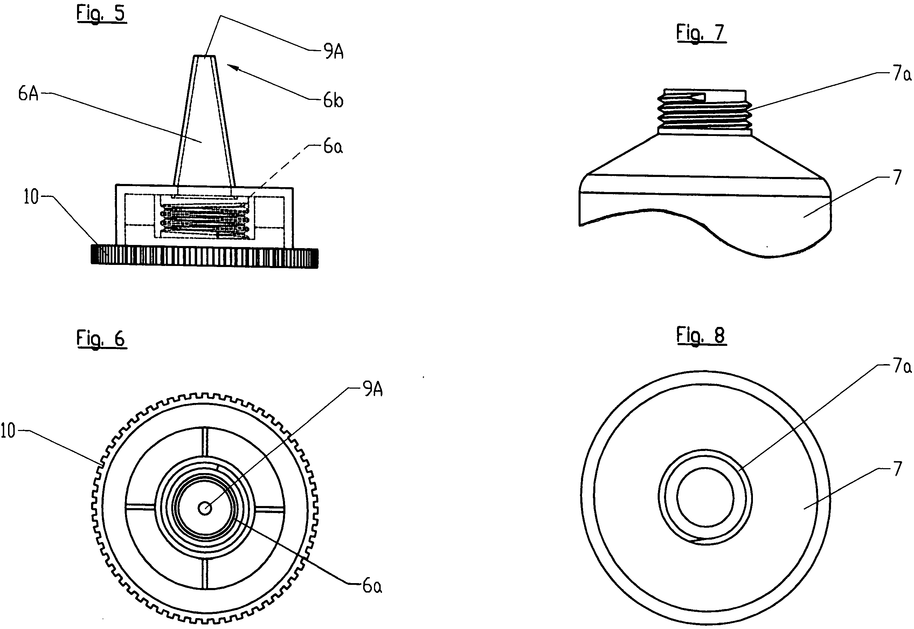

Les figures 5, 6, 9, 10, 11 et 12 illustrent différents exemples de conformation de l'orifice d'extrusion de la peinture à modeler.

Sur les figures 5 et 6, l'orifice de sortie 9A a une forme circulaire permettant l'extrusion d'un boudin de peinture cylindrique.

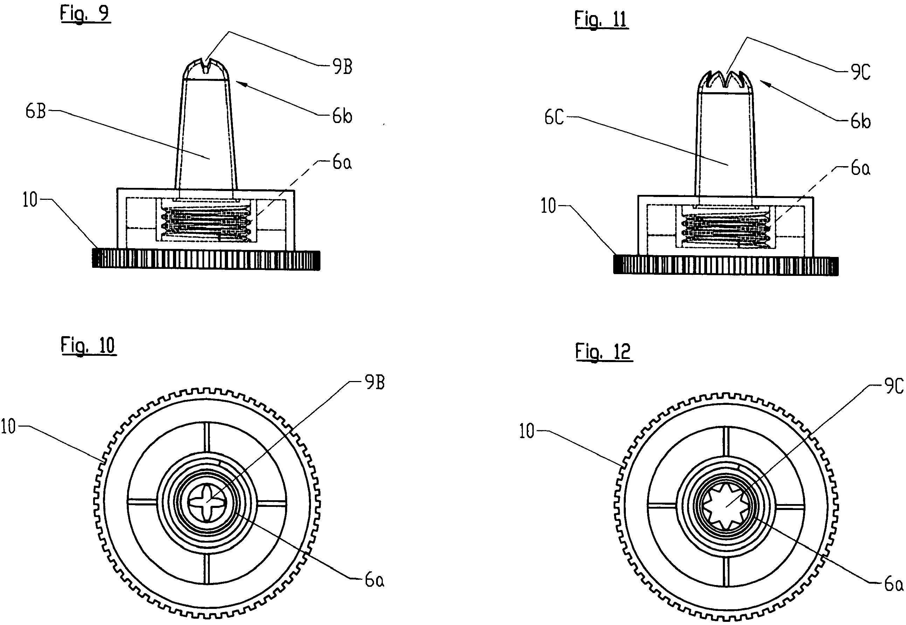

Sur les figures 9 et 10, l'orifice de sortie 9B a une section cruciforme permettant l'extrusion d'un boudin de peinture de section cruciforme.

Sur les figures 11 et 12, le pourtour de l'orifice de sortie 9C de la douille est muni de dents rentrantes 11 permettant l'extrusion d'un boudin de peinture de section étoilé, cannelé.

On obtient de la sorte un aspect attrayant supplémentaire des dessins exécutés avec des reliefs de différentes conformations possibles.

On comprend que les utilisateurs peuvent choisir d'utiliser la peinture directement à la sortie des tubes pour la travailler avec les doigts ou d'utiliser les canules.

Dans son conditionnement, la pâte est humide et brillante, après utilisation et séchage (évaporation des composants volatiles de la peinture), la pâte durcit mais reste quelque peu ductile et dotée d'une mémoire de forme. Il n'y a pas de phénomène de retrait lors du séchage (hors du conditionnement) de sorte que la couche de produit conserve son volume pendant le séchage. Une fois sec, le produit se présente sous la forme d'une mousse légère alvéolée, à mémoire de forme, avec un aspect doux.

Le changement de phase (état) de la peinture se fait par séchage résultant de l'évaporation des produits volatiles contenus dans ladite peinture, essentiellement de l'eau, et par coalescence du polymère.

Plus précisément, le changement d'état entre le produit fluide pâteux et le produit solide sec se fait par ce que l'on nomme le séchage physique (évaporation de l'eau et des composés volatiles) suivi de la coalescence des particules de polymère acrylique. Il en résulte la formation d'une matrice continue de polymère souple dans laquelle la charge de faible densité est répartie de façon homogène. La faible perte de volume provient de l'utilisation d'une masse importante de charge de faible densité. La structure en trois dimensions qui est obtenue lors de l'application du produit humide se transforme en une structure sèche microporeuse au travers de laquelle les composés volatiles, dont l'eau, peuvent s'évaporer.

La peinture peut être appliquée au doigt ou à l'aide des instruments habituellement utilisés par les artistes peintres (pinceaux, spatules, couteaux, etc.).

L'invention pourra être commercialisée sous forme de kits comprenant par exemple :
- un assortiment de tubes 7 ou pots de peintures de colorations différentes ;
- au moins une, ou plusieurs, douille(s) ou canule(s) d'extrusion 6 (dans le cas de contenants constitués par des tubes compressibles) agencée(s) pour pouvoir être fixée(s) de manière amovible sur l'embout desdits tubes, ces douilles ou canules comportant des orifices de sortie 6b de conformation ou section variées, permettant l'extrusion de peinture à modeler sous forme de filets, ou boudins de formes diverses ;
- des instruments traditionnels d'artiste peintre tels que pinceaux, spatules, couteaux, etc.

On a représenté des exemples d'utilisation de la peinture pour la réalisation de tableaux, la décoration d'objets divers et la création de formes variées. Pour la réalisation de telles oeuvres, on utilisera des peintures de différentes colorations.

Le produit peut être appliqué sur un support, de sorte à le recouvrir totalement ou partiellement, il peut servir à décorer des objets divers, tels que gobelets, bouteilles, carafes, etc.

Lorsque le produit est appliqué sur un support déformable, une fois sec, il peut suivre les mouvements du support sans se décoller dudit support ni faire apparaître des craquelures, ceci étant possible pour des déformations modérées. Lors du séchage, il n'y a pas de craquelures ni d'apparition de rides. Ceci est dû à l'alliance des charges de faible densité et du polymère qui absorbent les variations de dimension que pourrait entraîner le séchage du produit ; le polymère utilisé est donc un polymère ayant une température de transition vitreuse T_{g} de -30°C, de sorte que pour une température supérieure, le polymère est en mouvement et ne peut casser.

L'épaisseur des dessins, décors ou objets réalisés au moyen de la peinture peut varier et atteindre plusieurs centimètres, la seule contrainte étant le temps de séchage.

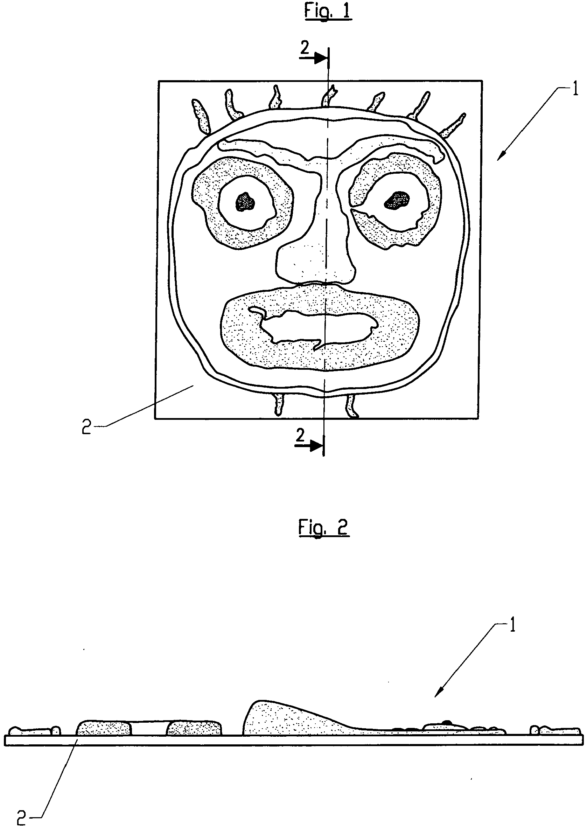

Sur les figures 1 et 2, on voit un aplat ou dessin en trois dimensions 1 réalisé sur un support plat 2 (par exemple feuille de papier ou de carton, toile, etc.).

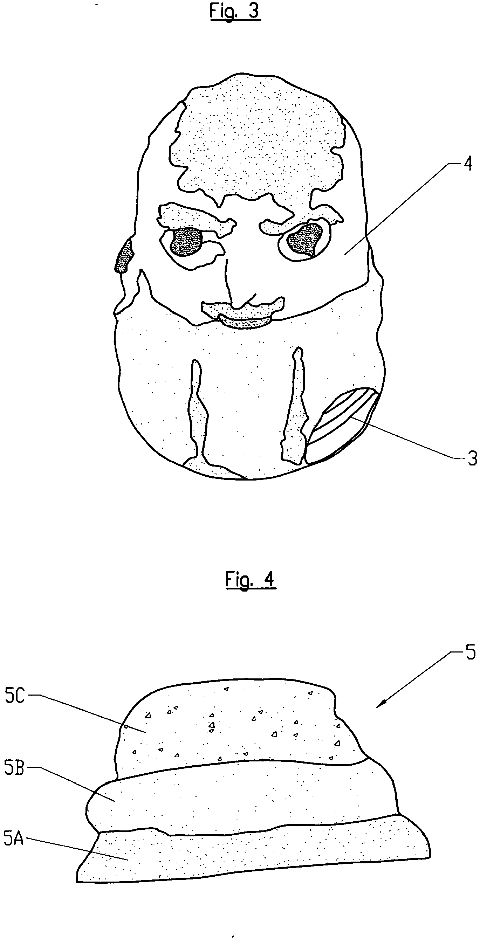

La figure 3 montre un gobelet 3 pourvu d'un décor 4 réalisé à l'aide de la peinture tridimensionnelle de l'invention.

Tandis que la figure 4 montre une oeuvre à caractère artistique 5 constituée par la superposition de couche de peinture de colorations différentes 5A, 5B, 5C.

On conçoit que la peinture à modeler selon l'invention peut être utilisée par une large frange de la population à partir de 3 ans, l'utilisation de ce produit pouvant séduire aussi bien les enfants que les adolescents ou que les adultes de tous âges.

L'invention concerne également les articles décoratifs réalisés ou décorés à l'aide de la peinture modelable précédemment décrite, tels que, par exemple : aplats, gobelets, bouteilles, carafes, etc., ou constituant des formes nouvelles variées.

## Revendications

1. Peinture modelable **caractérisée en ce qu'**elle est constituée par un mélange contenant :
- un liant organique constitué par un polymère à basse température de transition vitreuse (T_{g}) ;
- des charges de très faible densité ;
- des pigments ou matières colorantes ;
- des agents de modification de rhéologie ;
- de l'eau.

2. Peinture modelable selon la revendication 1, **caractérisée en ce que** le polymère à basse température de transition vitreuse (T_{g}) est constitué par un polymère acrylique ou par un polymère acrylate.

3. Peinture modelable selon l'une des revendications 1 ou 2, **caractérisée en ce que** le polymère à basse température de transition vitreuse (Tg) est constitué par un copolymère de type acrylique comprenant en outre, dans la chaîne polymère, des monomères Butyl-Acrylate.

4. Peinture modelable selon l'une quelconque des revendications 1 à 3, **caractérisée en ce que** les charges de très faible densité sont constituées par des microbilles de verre ou de silice.

5. Peinture modelable selon l'une quelconque des revendications 1 à 4, **caractérisée en ce que** l'agent de modification de rhéologie comprend :
- d'une part, un premier type d'épaississant constitué par un épaississant de type ASE ;
- d'autre part, un deuxième type d'épaississant constitué par un épaississant de type HASE.

6. Peinture modelable selon l'une quelconque des revendications 1 à 5, **caractérisée en ce qu'**elle contient une base.

7. Peinture modelable selon l'une quelconque des revendications 1 à 6, **caractérisée en ce qu'**elle contient un ou plusieurs conservateur(s) à bas point d'ébullition.

8. Peinture modelable selon la revendication 7, **caractérisée en ce que** les conservateurs sont constitués par :
- le (2-hydroxy-éthyl)-phényléther, et/ou
- le bronopol.

9. Peinture modelable selon l'une quelconque des revendications 1 à 8, **caractérisée en ce qu'**elle contient un agent d'amertume.

10. Peinture modelable selon la revendication 9, **caractérisée en ce que** l'agent d'amertume est constitué par le benzoate de dénatonium.

11. Peinture modelable selon l'une quelconque des revendications 1 à 10, **caractérisée en ce qu'**elle contient un tensioactif non ionique.

12. Peinture modelable selon l'une quelconque des revendications 1 à 6, **caractérisée par** les pourcentages massiques ci-après des matières premières entrant dans la composition de ladite peinture.
| **Nature de la matière première utilisée** | **% massique d'utilisation indicatif** |
|---|---|
| Liant organique permettant l'obtention d'un film souple tel que dispersion ou émulsion de polymère de basse T_{g}. En outre,le film sec obtenu doit être insoluble dans l'eau. | 45% à 55% |
| Charges de très faible densité | 5% à 20% |
| Pigments ou matières colorantes | 1 % à 15% |
| Conservateurs : autorisés par la Norme EN 71-7 | Suivant % maximum définis dans la Norme EN 71-7 |
| Tensioactif non ionique | 0,2% à 1,0% |
| Base | qsp (quantité suffisante pour) respect du paramètre de contrôle de pH 7,2 - 7,7 à 23°C, +/- 2°C |
| Agent d'amertume : tel que requis par la Norme EN 71-7 | Suivant % maximum défini dans la Norme EN 71-7 |
| Agents de modification de rhéologie | 1%à5% |
| Eau | Complément à 100% |

13. Procédé de préparation de la peinture modelable selon l'une quelconque des revendications 1 à 12, **caractérisée en ce qu'**on incorpore, sous agitation, dans une cuve contenant un volume d'eau adéquat, le liant organique sous forme de dispersion ou émulsion du polymère de base, les charges de très faible densité, et de préférence, le conservateur à plus haut point d'ébullition, un tensioactif non ionique, une base, ces ingrédients étant brassés par un mélangeur qui peut être avantageusement un mélangeur à turbine, équipant ladite cuve, on incorpore ensuite, sous agitation :
- les pigments ou matières colorantes ;
- le ou les conservateurs à plus bas point d'ébullition ;
- l'agent d'amertume ;
- et les agents de modification de rhéologie.

14. Kit de peinture **caractérisé en ce qu'**il comprend :
- un assortiment de tubes (7) ou pots de peintures de colorations différentes ;
- au moins une, ou plusieurs, douille(s) ou canule(s) d'extrusion (6) (dans le cas de contenants constitués par des tubes compressibles) agencée(s) pour pouvoir être fixée(s) de manière amovible sur l'embout desdits tubes, ces douilles ou canules comportant des orifices de sortie (6b) de conformation ou section variées, permettant l'extrusion de peinture à modeler sous forme de filets, ou boudins de formes diverses.

15. Articles décoratifs par exemple aplats, gobelets, carafes, bouteilles, **caractérisés en ce qu'**ils sont revêtus d'une représentation picturale réalisée à l'aide de la peinture modelable selon l'une quelconque des revendications 1 à 12.
